Europäisches Patentamt

European Patent Office

Office européen des brevets

(11) Veröffentlichungsnummer: **0 189 766 B1**

# (12) EUROPÄISCHE PATENTSCHRIFT

(45) Veröffentlichungstag der Patentschrift: 31.07.91

(51) Int. Cl.⁵: **C01B 25/12**

(21) Anmeldenummer: 86100256.6

(22) Anmeldetag: 10.01.86

(54) **Verfahren zur Verminderung der Reaktivität und zur Verbesserung des Fliessverhaltens von Phosphorpentoxid.**

(30) Priorität: 28.01.85 DE 3502705

(43) Veröffentlichungstag der Anmeldung:
06.08.86 Patentblatt 86/32

(45) Bekanntmachung des Hinweises auf die
Patenterteilung:
31.07.91 Patentblatt 91/31

(84) Benannte Vertragsstaaten:
**BE DE FR GB IT NL**

(56) Entgegenhaltungen:
**DE-C- 1 147 924**
**US-A- 2 907 635**
**US-A- 3 598 525**

(73) Patentinhaber: **HOECHST AKTIENGESELL-
SCHAFT**
**Postfach 80 03 20**
**W-6230 Frankfurt am Main 80(DE)**

(72) Erfinder: **Schimmel, Günther, Dr.**
**Ehrenstrasse 16**
**W-5042 Erftstadt(DE)**
Erfinder: **Kowalski, Werner**
**Am Ginsterberg 7**
**W-5354 Weilerswist(DE)**
Erfinder: **Heymer, Gero, Dr.**
**Fasanenaue 12**
**W-5042 Erftstadt(DE)**
Erfinder: **Gradl, Reinhard, Dr.**
**Heimbacher Weg 27**
**W-5042 Erftstadt(DE)**

Rank Xerox (UK) Business Services

EP 0 189 766 B1

**Beschreibung**

Die vorliegende Erfindung betrifft ein Verfahren zur Herstellung von hexagonalem Phosphorpentoxid mit verminderter Reaktivität und verbessertem Fließverhalten.

Phosphorpentoxid, welches industriell durch Verbrennen von gelbem Phosphor mit getrockneten sauerstoffhaltigen Gasen und Kondensation des dabei gebildeten dampfförmigen Phosphorpentoxids hergestellt wird, existiert in drei kristallinen Modifikationen, wobei die hexagonale Modifikation, die sog. H-Form, welche aus einzelnen $P_4O_{10}$-Molekülen besteht, unmittelbar bei der Kondensation des dampfförmigen Phosphorpentoxids entsteht. Von der orthorhombischen Modifikation, welche ein unendliches Polymer von $P_2O_5$-Gruppen ist, gibt es eine stabile und metastabile Form, wobei die stabile Form, die sog. O'-Form, durch 24stündiges Erhitzen der hexagonalen Modifikation auf 450 °C erhältlich ist, während die metastabile Form, die sog. O-Form, durch zweistündiges Erhitzen der hexagonalen Modifikation auf 400 °C im geschlossenen System hergestellt werden kann. Die chemische Reaktivität des Phosphorpentoxids nimmt ausweislich der Umsetzungsintensität mit Wasser in der Reihenfolge H-Form, O'-Form, O-Form ab (vergleiche J. R. VAN WAZER: "Phosphorus and its Compounds", Band I, 1958, Seiten 268, 269 und 276; KIRK-OTHMER: "Encyclopedia of Chemical Technology", 3. Auflage, Band 17, 1982, Seiten 517 und 518).

Häufig weist das industriell hergestellte hexagonale Phosphorpentoxid eine zu hohe Reaktivität auf. Diese hohe Reaktivität führt bei einem bedeutenden präparativen Einsatzgebiet des Phosphorpentoxids, nämlich der Herstellung von Phosphorsäureestern, oft zu unerwünschten Nebenreaktionen, die auf eine zu starke Wärmeentwicklung beim Eintrag des Phosphorpentoxids in die Alkohole zurückzuführen sind.

Deshalb wird in der DE-C-1 147 924 vorgeschlagen, ein mikrosphärisches Phosphorpentoxid der hexagonalen Modifikation, dessen Reaktivität zwischen der der normalerweise anfallenden hexagonalen Modifikation und einer der beiden reaktionsträgeren orthorhombischen Modifikationen des Phosphorpentoxids liegt, dadurch herzustellen, daß man einen heißen, Phosphorpentoxid enthaltenden Gasstrom durch eine dichte, turbulente Wirbelschicht aus Phosphorpentoxid-Teilchen leitet, wobei die Phosphorpentoxid-Teilchen bei einer Temperatur zwischen 90 und 175 °C gehalten werden.

Nachteilig ist bei diesem Verfahren, daß zu seiner Durchführung ein aufwendiger Wirbelschicht-Kondensations-Apparat erforderlich ist. Darüber hinaus ist der Energieaufwand bei der Durchführung des Verfahrens dann besonders hoch, wenn in fester Form vorliegendes Phosphorpentoxid, welches bei allen Wand-Kondensations-Verfahren anfällt (vergleiche US-A-3 598 525 und US-A-4 219 533), erst in einen Phosphorpentoxid-Gasstrom überführt werden muß.

Beim Verfahren zur Herstellung von polymerem Phosphorpentoxid aus festem Phosphorpentoxid der hexagonalen Modifikation nach der US-A-2 907 635 wird das hexagonale Phosphorpentoxid mit mindestens der gleichen Menge von festem polymerem Phosphorpentoxid vermischt und in Gegenwart von Wasser als Katalysator unter Atmosphärendruck auf eine Temperatur oberhalb von 300 °C erhitzt.

Es ist daher Aufgabe der vorliegenden Erfindung, ein unter Verwendung eines einfachen Apparates durchführbares Verfahren anzugeben, welches die Reaktivität von Phosphorpentoxid in der hexagonalen Modifikation in fester Phase unter gleichzeitiger Verbesserung seines Fließverhaltens vermindert. Das wird erfindungsgemäß dadurch erreicht, daß man in der hexagonalen Modifikation vorliegendes Phosphorpentoxid 0,5 bis 8 Stunden unter Ausschluß von Feuchtigkeit bei Temperaturen von 200 bis 390 °C unter Beibehaltung seiner Teilchengröße tempert.

Das Verfahren gemäß der Erfindung kann weiterhin wahlweise auch noch dadurch ausgestaltet sein, daß man

a) das Phosphorpentoxid 0,5 bis 3 Stunden tempert;
b) die Temperung in einer geschlossenen Reaktionszone durchführt;
c) in der Reaktionszone eine Schutzgasatmosphäre aufrechterhält;
d) die Temperung kontinuierlich in einer bewegten Reaktionszone mit äußerer Wärmezufuhr durchführt.

Mit dem erfindungsgemäßen Verfahren wird durch eine bloße Wärmebehandlung unterhalb der Umwandlungstemperatur hexagonal/orthorhombisch ein in der hexagonalen Modifikation vorliegendes Phosphorpentoxid erhalten, welches bei gleicher Korngröße und gleichem Röntgenspektrum eine wesentlich niedrigere Reaktivität und deutlich bessere Fließeigenschaften aufweist.

Das Verfahren gemäß der Erfindung kann in jedem beliebigen Apparat mit der Möglichkeit genügend großer Wärmeübertragung unter Ausschluß von Feuchtigkeit durchgeführt werden. Diskontinuierlich kann die Temperung in offenen Keramik- oder Metallgefäßen erfolgen, welche in einem mit Schutzgas gespülten Ofen erhitzt werden, während bei der Anwendung druckdichter

Behälter auf die Schutzgasspülung verzichtet werden kann. Zur kontinuierlichen Durchführung des Verfahrens eignen sich beheizte Drehrohre und Muldenkneter sowie beheizte Trogwärmetauscher mit Transport- und Mischschnecke, wobei die Reaktionsräume dieser Apparate mit unter leichtem Überdruck stehendem Schutzgas beaufschlagt sein sollten.

Die mit dem erfindungsgemäßen Verfahren erreichbare Endreaktivität des Phosphorpentoxids ist neben von Temperatur und Dauer der Temperung auch von der Reaktivität des Ausgangsmaterials abhängig. Daher müssen die Reaktionsbedingungen der angestrebten Reaktivität von Fall zu Fall angepaßt werden.

Zur Bestimmung der Reaktivität wird ein Test durchgeführt, welcher in Anlehnung an das in der DE-C-1 147 924 (Spalte 8, Zeilen 16 bis 32) beschriebene Verfahren ausgearbeitet wurde:

150 ml mit Phosphorpentoxid getrocknetes Kerosin (Aromatenanteil kleiner als 1 %) wird mit einer Temperatur von 22 bis 24°C in ein 500-ml-Dewargefäß eingefüllt und 20 g des zu testenden Phosphorpentoxids hinzugefügt. Die Mischung wird 30 s mit einem Kreuzblattrührer bei 600 Upm gerührt und anschließend unter weiterem Rühren 100 ml 2-Ethylhexanol mit einer Temperatur von 22 bis 24°C zugesetzt.

Die in der Suspension mit einem Fühler gemessene Temperatur wird auf einen x, y-Schreiber übertragen und gegen die Zeit aufgezeichnet. Die Zeit t, welche zwischen dem Anstieg von 5 auf 30°C liegt, wird graphisch ermittelt und daraus der Reaktivitätskoeffizient

$$R = \frac{25}{t} \ [°C/s]$$

errechnet.

Durch die folgenden Beispiele wird die Erfindung näher erläutert.

## Beispiele 1 bis 3

Ein zu Verklumpungen und Wandverbackungen neigendes mikrokristallines hexagonales Phosphorpentoxid eines Herstellers A mit einer Reaktivität von 3,7°C/s und einem Schüttgewicht von 680 g/l wurde in einem Porzellantiegel eine Stunde lang in einem elektrisch beheizten Ofen in Stickstoff-Atmosphäre auf die in der Tabelle angegebenen Temperaturen aufgeheizt und für eine Stunde bei dieser Temperatur gehalten.

Anschließend sind die Schüttgewichte der PhosphorpentoxidProben unverändert, auch das Guinier-Diagramm zeigt nur die Linien der hexagonalen Modifikation. Das bei 300 und 350°C getemperte Phosphorpentoxid ist gut rieselfähig, es klumpt und staubt nicht. Die Reaktivitäten der drei Phosphorpentoxid-Proben sind in der Tabelle aufgeführt.

## Beispiele 4 bis 6

Verschiedene hexagonale Phosphorpentoxid-Proben des Herstellers A, welche zum Verklumpen neigen, wurden in einem argongefüllten 500 ml-Stahlautoklaven auf die in der Tabelle angegebenen Temperaturen aufgeheizt und 1,5 Stunden bei dieser Temperatur belassen.

Anschließend sind die Schüttgewichte der PhosphorpentoxidProben unverändert und die Guinier-Diagramme zeigen nur die Linien der hexagonalen Modifikation. Alle Proben sind gut rieselfähig und verbacken nicht. Die Reaktivitäten der drei Phosphorpentoxid-Proben sind in der Tabelle aufgeführt.

## Beispiel 7

Eine zum Verklumpen neigende Phosphorpentoxid-Probe eines Herstellers B wurde analog den Beispielen 4 bis 6 in einem Stahlautoklaven auf 300°C aufgeheizt und 5 Stunden bei dieser Temperatur belassen.

Anschließend ist die Phosphorpentoxid-Probe gut rieselfähig. Ihr Schüttgewicht ist unverändert und ihr Guinier-Diagramm zeigt nur die Linien der hexagonalen Modifikation.

Die Reaktivitäten der Phosphorpentoxid-Probe sind in der Tabelle aufgeführt.

## Beispiel 8

2 kg Phosphorpentoxid vom Hersteller A mit einer Reaktivität R = 3,2°C/s wurden pro Stunde über eine verschlossene Dosierschnecke in die Stirnwand eines elektrisch beheizten Drehrohres (Länge: 160 cm, Durchmesser: 11 cm) aus rostfreiem Stahl eindosiert. In der gasdicht abgeschlossenen Anlage wurde über eine Tauchung ein Stickstoff-Überdruck von etwa 300 Pa aufrechterhalten. Die im im Drehrohr befindlichen Phosphorpentoxid gemessene Temperatur betrug an der wärmsten Stelle 340°C. Das ausgetragene Phosphorpentoxid fiel in einen geschlossenen Stahlbehälter, welcher bei Bedarf entleert wurde.

Das ausgeschleuste Phosphorpentoxid ist gut rieselfähig und weist eine Reaktivität von 0,6°C/s auf.

Tabelle

| Beispiel | Temperatur | Phosphorpentoxid | | |
|---|---|---|---|---|
| | | Hersteller | Reaktivität R ($^{o}$C/s) | |
| | | | vorher | nachher |
| 1 | 200 | A | 3,7 | 2,9 |
| 2 | 300 | A | 3,7 | 0,7 |
| 3 | 350 | A | 3,7 | 0,1 |
| 4 | 300 | A | 1,9 | 1,0 |
| 5 | 350 | A | 3,5 | 0,05 |
| 6 | 300 | A | 4,6 | 2,5 |
| 7 | 300 | B | 1,8 | 0,4 |

**Patentansprüche**

1. Verfahren zur Herstellung von hexagonalem Phosphorpentoxid mit verminderter Reaktivität und verbessertem Fließverhalten, dadurch gekennzeichnet, daß man in der hexagonalen Modifikation vorliegendes Phosphorpentoxid 0,5 bis 8 Stunden unter Ausschluß von Feuchtigkeit bei Temperaturen von 200 bis 390° C unter Beibehaltung seiner Teilchengröße tempert.

2. Verfahren nach Anspruch 1, dadurch gekennzeichnet, daß man das Phosphorpentoxid 0,5 bis 3 Stunden tempert.

3. Verfahren nach Anspruch 1 oder 2, dadurch gekennzeichnet, daß man die Temperung in einer geschlossenen Reaktionszone durchführt.

4. Verfahren nach Anspruch 1 oder 2, dadurch gekennzeichnet, daß man in der Reaktionszone eine Schutzgasatmosphäre aufrechterhält.

5. Verfahren nach einem der Ansprüche 1 bis 4, dadurch gekennzeichnet, daß man die Temperung kontinuierlich in einer bewegten Reaktionszone mit äußerer Wärmezufuhr durchführt.

## Claims

1. A process for the preparation of hexagonal phosphorus pentoxide having reduced reactivity and improved flow behavior, which comprises heat-treating phosphorus pentoxide present in the hexagonal modification for 0.5 to 8 hours with the exclusion of moisture at temperatures of 200 to 390°C while maintaining its particle size.

2. The process as claimed in claim 1, wherein the phosphorus pentoxide is heat-treated for 0.5 to 3 hours.

3. The process as claimed in claim 1 or 2, wherein the heat treatment is carried out in a closed reaction zone.

4. The process as claimed in claim 1 or 2, wherein an inert gas atmosphere is maintained in the reaction zone.

5. The process as claimed in one of claims 1 to 4, wherein the heat treatment is carried out continuously in a mobile reaction zone with external heat input.

## Revendications

1. Procédé pour la fabrication de pentoxyde de phosphore hexagonal de réactivité réduite et de fluidité améliorée, caractérisé en ce que l'on traite le pentoxyde de phosphore présent dans la variété hexagonale pendant 0,5 à 8 h à l'abri de l'humidité à des températures de 200 à 390°C avec maintien de sa dimension de particules.

2. Procédé selon la revendication 1, caractérisé en ce que l'on traite le pentoxyde de phosphore pendant 0,5 à 3 h.

3. Procédé selon la revendication 1 ou 2, caractérisé en ce que l'on effectue le traitement thermique dans une zone de réaction fermée.

4. Procédé selon la revendication 1 ou 2, caractérisé en ce que l'on maintient dans la zone de réaction une atmosphère de gaz protecteur.

5. Procédé selon l'une des revendications 1 à 4, caractérisé en ce que l'on met en oeuvre le traitement thermique en continu dans une zone de réaction agitée avec apport extérieur de chaleur.